Europäisches Patentamt

European Patent Office

Office européen des brevets

(19)

(11) Publication number: **0 303 315**
**A1**

## EUROPEAN PATENT APPLICATION

(21) Application number: **88201626.4**

(51) Int. Cl.⁴: **E02D 13/10**

(22) Date of filing: **28.07.88**

(30) Priority: **11.08.87 GB 8718997**

(43) Date of publication of application:
**15.02.89 Bulletin 89/07**

(84) Designated Contracting States:
**AT DE FR IT NL SE**

(71) Applicant: **TBA Industrial Products Limited**
**20, St. Mary's Parsonage**
**Manchester M3 2NL(GB)**

(72) Inventor: **McGill, John David**
**26 Coll Drive**
**Davyhulme Manchester M31 2FX(GB)**

(74) Representative: **Newman, Dennis Daniel**
**Ernest et al**
**Bowdon House Ashburton Road West**
**Trafford Park**
**Manchester M17 1RA(GB)**

(54) **Piledriver pads.**

(57) A piledriver pad made without asbestos fibre
comprises a laminate of resilient sheets of cured
elastomeric material reinforced by fibres of glass or
other vitreous material eg ceramic or mineral silicate
fibres, or aramid or polyacrylonitrile fibres.

EP 0 303 315 A1

## Piledriver pads

This invention relates to piledriver pads, that is to say the cushions employed in pile driving in order to limit, in both the pile and the hammer, the vry high impact stresses that occur during operation.

The piledriver pads at present in widest use comprise compressed asbestos fibre. This invention provides a pad made without asbestos.

According to the invention a non-asbestos piledriver pad comprises a laminate of resilient sheets of cured elastomeric material reinforced by vitreous fibres or aramid or polyacrylonitrile fibres. (Vitreous is a term we use to include ceramic and mineral silicate fibres, as well as glass fibres.)

In another aspect, the invention provides a method of pile driving, in which the pad interposed between the hammer and the pile comprises a laminate as just defined.

The elastomeric material, which may form 10-35% and preferably 15-30% by weight of the sheet, may for example be natural rubber, styrene butadiene rubber, acrylonitrile butadiene rubber or polychloroprene. The elastomer is preferably admixed with a non-fibrous inorganic filler such as silica, a metallic silicate, barytes, precipitated calcium carbonate or carbon black.

The vitreous fibre reinforcement, which may form 20-70% by weight of the sheet, is preferably formed by glass fibres, suitably of diameter 3-25 μm and length 3-12 mm.

The manufacture of suitable elastomeric sheet is described in our British Patent 2 094 821, and such material is commercially available as glass fibre sheet packing, for sealing against steam, water, gases and oils, under the name PERMANITE AF 2100. This is conveniently employed in the 3mm-thick form.

If aramid fibres are employed to provide the fibrous reinforcement, those sold under the name KEVLAR are very suitable, particularly in the form known as 'pulp'. Suitable polyacrylonitrile fibres are available under the name DOLANIT.

A laminate can be prepared from the elastomeric sheet with the use of a rubber solution contact adhesive such as that available under the name EVO-STICK. After application to the sheets the adhesive is allowed to become touch-dry, and the sheets are superimposed one upon another to the desired thickness (eg 12mm thick for a pad of diameter 600mm), the assembly of sheets being then fed to a press and kept under pressure eg 1MPa at ambient temperature for 5 minutes.

Preferably, the assembly is made with the fibre alignment of each sheet at right angles to that of its immediate neighbours.

It is preferred that at least the two outermost sheets should include structural reinforcement, such as a wire gauze insert, as by use of packing sold under the name PERMANITE AF 2150. If desired, wire gauze insert sheets can be used throughout the thickness of the pad. Similarly, inserts of flexible sheet metal, such as tin-plated cold rolled steel of thickness 0.25mm, can be employed to impart structural reinforcement. In a preferred construction, three layers of structurally reinforced elastomeric material are bonded together to form a laminate, each layer consisting of two sheets of fibre-reinforced elastomeric material which enclose a reinforcing flexible steel sheet or other flexible element of metal.

The elastomeric sheet can be cut to the disc-form (diameter, 150-1500mm or more) customary for piledriver pads, either before or after making up into laminate.

## Claims

1. A non-asbestos piledriver pad characterised in that it comprises a laminate of resilient sheets of cured elastomeric material reinforced by vitreous fibres or aramid or polyacrylonitrile fibres.

2. A pad according to claim 1, in which the elastomeric material forms 10-35% by weight of the sheet.

3. A pad according to claim 1 or 2, in which the elastomeric material is admixed with a non-fibrous inorganic filler.

4. A pad according to claim 3, in which the filler is silica, a metallic silicate, barytes, precipitated calcium carbonate or carbon black.

5. A pad according to any of claims 1 to 4, in which vitreous fibres form 20-70% by weight of the sheet.

6. A pad according to any of claims 1 to 5, in which the vitreous fibres are glass fibres.

7. A pad according to any preceding claim, in which the elastomeric material is natural rubber, sytrene butadiene rubber, acrylonitrile butadiene rubber or polychloroprene.

8. A pad according to any of claims 1 to 7, in which at least the outermost resilient sheets of cured elastomeric material are structurally reinforced by flexible elements of metal.

9. A method of pile driving, in which the pad interposed between the hammer and the pile comprises a laminate as set forth in claim 1.

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| X | US-A-4 479 552 (CHAPPELOW)<br>* Column 2, lines 45-53,58-68; column 3, lines 3-24,39-46; column 4, lines 1-10,12-43 * | 1,3,4,6 ,9 | E 02 D 13/10 |
| A | | 5,7 | |
| A | FR-A-2 395 360 (RUHRCHEMIE)<br>* Page 1, lines 36-38; page 2, lines 1-22; page 5, lines 2-15, figure * | 1,3 | |
| A | FR-A-2 157 292 (MANNESMANN)<br>* Page 4, lines 2-5,13-18; figure 5 * | 1,8 | |
| A | GB-A-1 491 629 (KLINGER)<br>* Page 1, lines 63-83; page 2, lines 22-24; figures 1,2A,2B * | 8 | |
| A | GB-A-1 038 828 (GLOVER PLASTICS) | | |

TECHNICAL FIELDS
SEARCHED (Int. Cl.4)

E 02 D

The present search report has been drawn up for all claims

| Place of search | Date of completion of the search | Examiner |
|---|---|---|
| THE HAGUE | 18-11-1988 | RUYMBEKE L.G.M. |